# EUROPEAN PATENT SPECIFICATION

(11) **EP 2 951 563 B1**
(45) Date of publication and mention of the grant of the patent: **11.12.2019**
(21) Application number: 13705846.7
(22) Date of filing: 04.02.2013
(51) Int. Cl.: G01N 21/95

(54) **METHOD AND APPARATUS FOR INSPECTING PACKAGES CONTAINING MEDICATION**
VERFAHREN UND VORRICHTUNG ZUR INSPEKTION VON PACKUNGEN MIT MEDIKAMENTEN
PROCÉDÉ ET APPAREIL D'INSPECTION D'EMBALLAGES CONTENANT DES MÉDICAMENTS

(43) Date of publication of application: 09.12.2015
(73) Proprietor: Ziuz Holding B.V., 8401 DK Gorredijk (NL)
(72) Inventor: STIENSTRA, Cornelis, 8400 AC Gorredijk (NL); ROZEBOOM, Tiemen Hendrik, 8400 AC Gorredijk (NL); PRUIMBOOM, Dries Johannes, 8400 AC Gorredijk (NL)
(74) Representative: V.O.
(86) International application number: PCT/NL2013/050056
(87) International publication number: WO 2014/119994

(56) References cited:
- EP-A1- 1 912 159
- WO-A2-02/25568
- WO-A2-2008/033019
- US-A1- 2012 200 596
- US-A1- 2012 201 434

## Description

### FIELD AND BACKGROUND OF THE INVENTION

The invention relates to a method for inspecting packages containing medication according to the introductory portion of claim 1 and to an apparatus according to the introductory portion of claim 9. Such a method and such an apparatus are known from European patent application 1 912 159.

For many patients, in particular elderly patients, multiple medicament dosage regimes are prescribed. Such multiple dosage regimes often involve taking a plurality of medicaments a plurality of moments of medicament administration per day. In particular when the combination of medicaments to be administered differs between the moments of medicament administration, adhering to such multiple dosage regimes is difficult and prone to errors.

One solution to support patients and nurses in adhering to dosage regimes, is to package medicaments prescribed for a patient in a strip of dosage bags, each bag containing the medicaments, such as one or more pills, tablets and/or capsules, to be taken during a particular moment of medicament administration, for instance, for each day, one bag containing medicaments to be taken after getting up, one bag containing medicaments to be taken around noon, one bag containing medicaments to be taken before or after dinner and one bag containing medicaments to be taken before sleeping. Such a strip may contain dosage bags for several days, a week or longer. The medicaments are packaged into the bags automatically using packaging apparatuses specifically designed for this task and controlled in accordance with data representing dosage regimes of the patients for whom the dosage bags are prepared. The packages suitable for packaging medication may also be used for packaging other items for medical or personal use, such as syringes, plasters, or single use containers filled with e.g. ointment or disinfectant. Additionally, such packages may also be used for efficient labeled distribution of small numbers of medicaments or other items for medical or personal use.

In spite of meticulous care, also in packaging the dosage bags failures do occur. Failures that are encountered are for instance:
- a dosage bag containing wrong tablets,
- tablets packaged in a dosage bag for a too early or too late moment of medicament administration,
- too many or too few tablets in a bag,
- damaged tablets, and
- damaged dosage bags, and
- dosage bags containing non-medicaments such as paperclips etc.

To reduce the failure rate, it is usual that the strips of dosage bags are inspected and the contents of each package is checked by comparing with the contents of the respective package as specified in a data set on the basis of which the packages have been filled. Since checking very large numbers of dosage bags is a tedious task, efforts have been undertaken to at least partially automate the checking of the dosage bags.

One example of a commercially available apparatus for checking dosage bags is the ZiuZ Inspector which uses advanced image recognition technology to analyze the color, shape and size of the tablets in the dosage bag, which are transparent on one side of the medicaments and translucent or transparent on the other side of the medicaments.

For capturing an image from which the color, shape and size of the tablets in the dosage bag can be identified, an illumination dome is used which creates a light setting which remains constant and free of drop shadows.

### SUMMARY OF THE INVENTION

It is an object of the invention, to provide a solution which allows a more reliable detection of the contours of medicaments in a medicament package which is transparent on one side of the medicaments and translucent or transparent on the other side of the medicaments.

According to the invention, this object is achieved by providing a method according to claim 1. The invention can also be embodied in an apparatus according to claim 9, which is specifically arranged for carrying out the method according to claim 1.

Because the dosage bags that are inspected are irradiated from the second side with radiation in wavelength rage containing radiation outside the first wavelength range of which the radiation pattern predominantly determines the first image, a second, back lighted image of contours of the medicaments and any other objects present in the package can be obtained with little or no disturbance of the first image. This allows simultaneous irradiation of the medication in the package from the first and second sides and/or simultaneous capturing of the first and second images. This in turn allows capturing of the first and second images in a simple manner, with little or no risk of displacement of the medicaments between capturing of the images even if the packages are not held stationary while capturing the images.

Particular embodiments of the invention are set forth in the dependent claims.

Further features, effects and examples of the invention are set forth in the description in which reference is made to the drawings.

### BRIEF DESCRIPTION OF THE DRAWINGS

Fig. 1 is a schematic cut-away side view of an example of an apparatus according to the invention;
Fig. 2 is an example of a first image captured in a method according to the invention, colors being replaced by different hatchings;
Fig. 3 is an example of a second image captured in a method according to the invention;
Fig. 4 is an example of a third image captured in a method according to the invention; and
Fig. 5 is an example of sensitivity curves of an image sensor arrangement of an example of an apparatus according to the invention.

### DETAILED DESCRIPTION

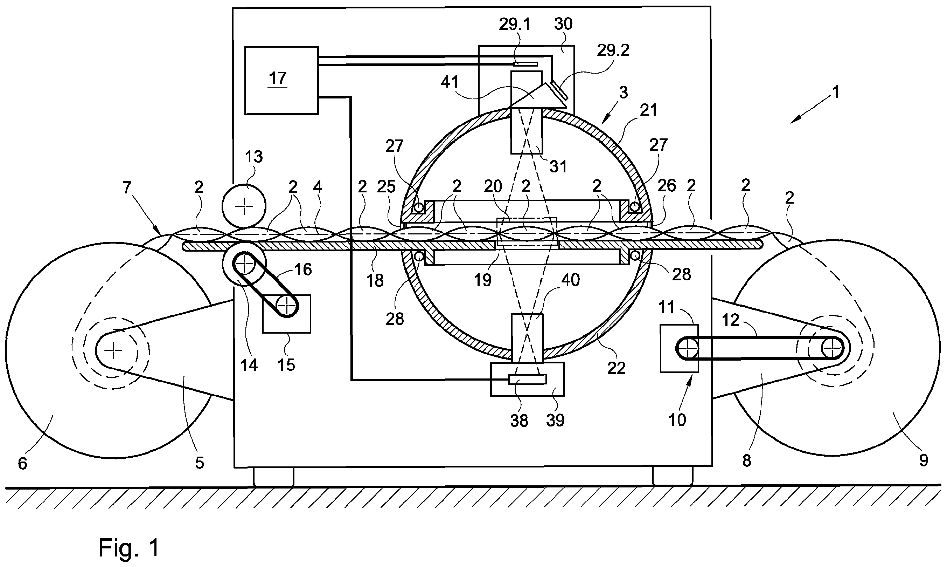

First, an example of an apparatus 1 according to the invention for inspecting packages 2 containing medication is described with reference to Fig. 1. The apparatus has an inspection station 3 and a transporter for displacing packages 2 containing medication along a transport path 4 through the inspection station 3.

In the present example, the transporter has an upstream reel holder 5 for holding a reel 6 from which a string 7 of packages 2 can be unwound and a downstream reel holder 8 for holding a reel 9 onto which inspected packages 2 of the string 7 can be wound. The downstream reel holder is equipped with a drive 10 for driving rotation of the reel 9 suspended held by the downstream reel holder 9. The drive 10 is composed of a motor 11 and a drive string 12. The drive 10 can be arranged to drive the reel 9 with a torque that is sufficient for keeping the string 7 slightly tensioned between the downstream reel 9 and a pair of transport rollers 13, 14 engaging the string of packages 7 upstream of the inspection station 3. For this purpose, the drive string 12 may be allowed to slip or a slip coupling may be included. Alternatively, the motor 11 may for instance be controlled to drive with a torque in a predetermined range. One roller 14 of the pair of rollers 13, 14 is coupled to a motor 15 via a drive belt 16. The motor 15 is arranged to rotate at an angular velocity in a range selected such that the string 7 passes through the inspection station 3 at a velocity meeting the capacity of the inspection station and a data processor 17 connected thereto.

The transporter further includes a guide 18 for guiding the string 7 of packages 2 along the transport path 4. In the guide 4 an opening 19 is left via which a package 2 in an inspection area 20 can be inspected from below.

The inspection station 3 is composed of an arrangement for irradiating the package 2 in the inspection area 20 and arrangements for capturing images of the package 2 in the inspection area 20.

The arrangement for irradiating the package 2 in the inspection area 20 is composed of a housing for keeping environmental light away from the package 2 in the inspection area 20 and radiation sources for irradiating the package 2 in the inspection area 20.

The housing is composed of an upper dome 21, a lower dome 22 and light blocking brushes 25, 26 at the entry and exit for screening off gaps between the entry or exit and the string 7 of packages 2. The domes 21, 22 have a matte white inner surface so that a very diffuse lighting of a package 2 in the inspection area 20 is achieved and the formation of shadows cast by irradiated medicaments in the package 2 in the inspection area is counteracted. Using image recognition, such shadows are difficult to distinguish from real objects.

The radiation sources include first radiation sources 27 arranged in a ring-shaped configuration for irradiating a package 2 in the inspection area 20 from a first (in this example upper) side of the transport path 4 and a second radiation sources 28 also arranged in a ring-shaped configuration for irradiating the package 2 in the inspection station 20 from a second (in this example bottom) side of the transport path 4 opposite the first side of the transport path 4. The second radiation sources 28 are arranged for directing radiation via the inner surface of the lower dome 22 through the inspection area 20 towards the first side of the transport path 4.

A first image sensor 29.1 and a second image sensor 29.2 are arranged in a camera 30 with a lens 31 and a prism 41 for sensing portions of a radiation pattern from the inspection area 20, the radiation pattern representing a view from the first side of the package 2 in the inspection area 20.

The first radiation sources 27 are arranged for irradiating the inspection area 20 at least predominantly with radiation in a first wavelength range and the second radiation sources are arranged for irradiating the inspection area 20 with radiation in a second wavelength range including (preferably predominantly) radiation outside the first wavelength range. The first radiation sources may for instance be LEDS emitting polychromatic white light and the second radiation sources may for instance be LEDS emitting NIR (Near InfraRed) radiation.

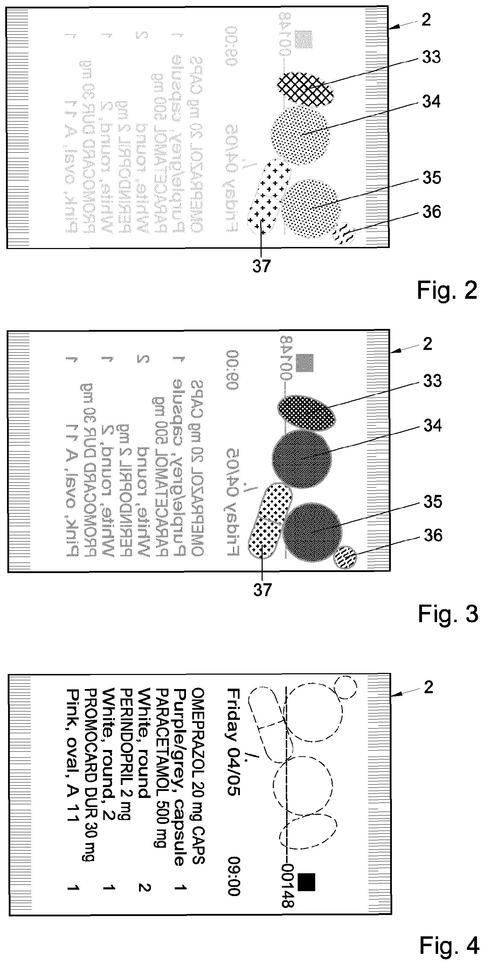

The image sensor 29.1 is arranged relative to the prism 41 for capturing a first image (see e.g. Fig. 2) at least predominantly of received radiation in the first wavelength range and the second image sensor 29.2 is arranged relative to the prism 41 for capturing a second image (see e.g. Fig. 3) at least predominantly of received radiation in the second wavelength range and outside said first wavelength range.

According to the present example, the image sensors 29.1 and 29.2 are CCDs of a 2-CCD RGB/Near Infrared camera in which the first CCD image sensor 29.1 is equipped with a Bayer filter (not shown) and provides RGB (Red/Green/Blue) image components from which a color image (i.e. an image of wavelengths in the visible wavelength range) can be composed and the second CCD image sensor 29.2 provides a NIR image (i.e. an image of wavelengths outside the visible wavelength range).

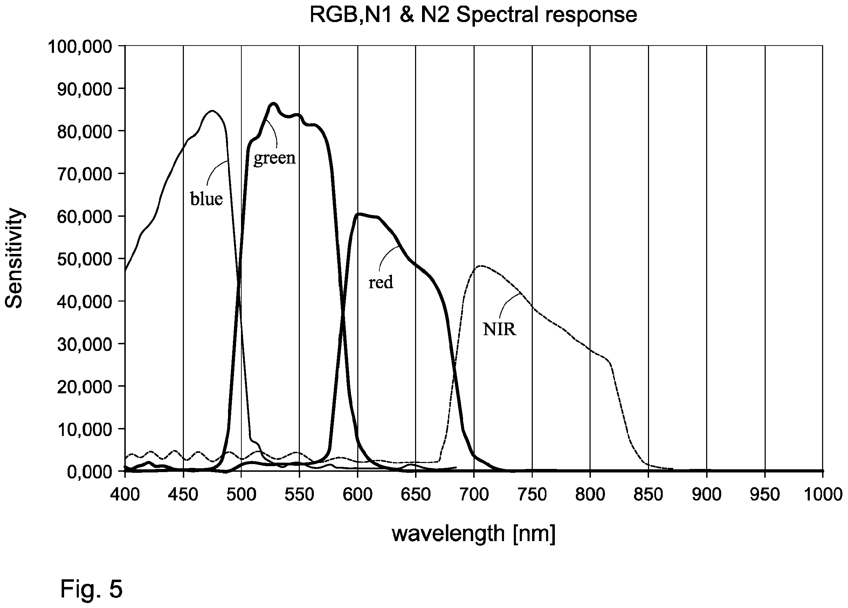

Alternatively, a 4-CCD camera with separate image sensors for capturing red green and blue image components and a NIR radiation image can be used. An example of sensitivity curves of image sensors of a suitable 4-CCD camera is shown in Fig. 5. In this example, the NIR image sensor is also sensitive to visible light of the upper end (from about 680nm) of the visible wavelength range (up to about 740 nm).

An example in the form of a 1-CCD camera is also conceivable. In such a camera, a four channel Bayer filter may be used in which one filter type of the Bayer filter is arranged for at least predominantly letting through a wavelength range for forming the second image while the other three wavelength ranges of the other filter types of the Bayer filter are for at least predominantly letting through radiation in wavelength ranges red, green and blue for obtaining a color image. This will lead to a slightly reduced resolution, which may be compensated for by using a larger and/or higher resolution image sensor and Bayer filter. Alternatively, it is also possible to use a conventional or adapted three channel Bayer filter and to use only two channels for the first color image and the third channel for the second image. This variant will be low cost, provide a relatively high resolution, but a reduced color representation, because only two channels are available for the color representation.

In operation, using an apparatus as described above, a method according to the invention can for instance be carried out as is described below.

Packages 2 containing medication 33-37 (see Figs. 2 and 3), such as one or more pills, tablets and/or capsules, are passed along the transport path 4 through the inspection area 20. For each package 2 to be inspected, the package 2 is illuminated in the inspection area 20 from a first side of the transport path 4. On this first side of the medicament or medicaments 33-37, the package 2 is at least partially transparent (preferably see-through clear) to the radiation so that any medicaments 33-37 therein are illuminated as well. The illumination from the first side is at least predominantly with radiation in a first wavelength range.

The package 2 and any medicament or medicaments 33-37 therein are also illuminated from the second side of the transport path 4 opposite the first side of the transport path 4 and towards the first side. On the second side of the medicament or medicaments 33-37, the package 2 is at least partially translucent (e.g. matte and/or milky white) so that radiation is diffused or transparent in the sense of see-through clear to the radiation from the second side. The illumination from the second side is with radiation in a second wavelength range including radiation outside the first wavelength range.

A radiation pattern is received from the inspection area 20 on the first side. This radiation pattern represents a view of the package 2 from the first side.

A first image (see Fig. 2) of a first portion of the received radiation pattern at least predominantly in the first wavelength range is captured and a second image (see Fig. 3) of a second portion of the received radiation pattern in the second wavelength range at least predominantly outside the first wavelength is captured.

The second image (Fig. 3) constitutes a back lighted image showing contours of the medicaments 33-37 in the package against the background of the translucent wall of the package on its second side. In this second image, the contours of the medicaments 33-37 are shown more clearly than in the first image (Fig. 2), in particular if the color and/or tint of the medicament contrasts very little from the wall of the package 2 on its second side. Thus, the medicaments present in the package can be detected more reliably and subsequently combined with the colors, tints and/or patterns in corresponding locations in the first image for obtaining the visual data regarding medicaments in the package that are to be obtained with the reference visual properties of medicaments intended to be present in that package.

Because the dosage bags that are inspected are illuminated from the second side with radiation in wavelength range containing radiation at least predominantly outside the first wavelength range of which the radiation pattern at least predominantly determines the first image, the second, back lighted image of contours of the medicaments and any other objects present in the package can be obtained with little or no disturbance of the first image. This allows simultaneous irradiation from the first and second sides and/or simultaneous capturing of the first and second images. This in turn allows capturing of the first and second images in a simple manner, with little or no risk of displacement of the medicaments between capturing of the images even if the packages are not held stationary while capturing the images.

Preferably, the images are captured simultaneously while the package is irradiated from both the first and the second side, since this excludes errors due to displacement of medicaments even if the images are captured while the packages are moving. However, it is also possible to capture the first and second images during at least partially overlapping (simultaneous) time intervals or sequentially while the package is simultaneously irradiated from both the first and the second side or to have the image sensor continuously or repetitively active for capturing the first and second images and obtaining the still images by stroboscopically irradiating the package, preferably simultaneously or during at least partially overlapping (simultaneous) time intervals with the described radiation from the first and second sides. Thus, the images can be captured in many manners, without having to take special measures to avoid disturbance of the first image by the radiation of the second image.

The radiation with which the packages 2 are irradiated from the first side may include radiation of wavelengths outside the first wavelength range and in the second wavelength range. However, the intensity of such radiation should be low enough not to reduce the contrast in the second image to such an extent that the contours of objects in the package can no longer be detected reliably.

For reducing disturbance of the first image by the irradiation from the second side, it is preferred that the portion of the irradiation in the first wavelength range that at least predominantly determines the first image constitutes at least 70% and, in order of increasing preference, at least 80%, 90% or 95% of the radiation that determines the first image. For the same purpose, it is further preferred that at least 70% and, in order of increasing preference, at least 80%, 90% or 95% of the irradiation from the second side is outside the first wavelength range.

For reducing disturbance of the second image by reflected irradiation from the first side, it is preferred that at least 70% and, in order of increasing preference, at least 80%, 90% or 95% of the irradiation from the first side is in the first wavelength range. For the same purpose, it is preferred that the portion of the irradiation in the second wavelength range outside the first wavelength range that at least predominantly determines the second image constitutes at least 70% and, in order of increasing preference, at least 80%, 90% or 95% of the radiation that determines the second image.

Generally, a full separation of sensitivity ranges of the first and second image sensors and of the irradiation wavelength ranges inside and outside the first wavelength range would be preferred, but may entail excessive costs and may compromise sensitivity. Fig. 5 shows an example of spectral response curves of a commercially available sensor arrangement and illustrates that overlaps occur in the sensitivity ranges of for instance the visible light and the near infrared sensors.

If at least one object is present in the package, preferably, at least one dark area 33-37 in the second image (Fig. 3), where radiation from the second side is obscured, is identified as a projection of a (potential) medicament in the package, at least a color, tint or pattern (such as a breaking line or a raised or recessed marking) of a corresponding portion 33-37 of the first image (Fig. 2) is determined and the determined color, tint and/or pattern of that portion is compared with a predetermined color, tint and/or pattern of at least one medicament specified to be present in the package. To that end, the processor 17 is arranged for identifying at least one dark area in the second image as a projection of a medicament in the package, determining at least a color, tint or pattern of a corresponding portion of the first image; and at least comparing the determined color, tint or pattern with a predetermined color, tint or pattern of at least one medicament specified to be present in the package.

The outcome of the comparison may be that the object is identified as being one of the medication. If the object is identified as not being one of the medication, but another medicament, or a non-medicament, an error warning is generated and the package is marked (on the package itself and/or on a list) as potentially faulty. Preferably, the potentially faulty packages are checked humanly. This allows correcting the error while keeping the faulty package in the string 7.

If at least one dark area in the second image (Fig. 3) is identified as a projection of a (potential) medicament in the package, determining at least a size or shape of the at least one dark area; and comparing the determined size or shape with a predetermined size or shape of at least one medicament specified to be present in the package allows to directly use information obtained from the detected contours for comparison with reference properties of medicaments specified to be present in the package. To this end, the processor 17 is further arranged for determining at least a size or shape of said at least identified one dark area; and comparing the determined size or shape with a predetermined size or shape of at least one medicament specified to be present in the package.

The first radiation sources 27 are preferably arranged for irradiating polychromatic light in the visible light wavelength range and covering a large portion of the visible light spectrum. Illumination from the first side with polychromatic light in the visible light wavelength range (about 380 nm to about 740 nm) allows a reliable distinction between colors of medicaments, in particular if the illumination covers a large portion of the visible light spectrum.

The second radiation sources are preferably arranged for irradiating radiation outside the visible light wavelength range. Irradiation from the second side with radiation outside the visible light wavelength range leaves the entire visible wavelength range available for color detection from the first side without disturbance by radiation from the second side. However, some of the light from the second side may be in the visible light wavelength range without causing too much disturbance of the first image, in particular if the sensors used for capturing the first image are not or not very sensitive to that radiation in the visible wavelength range. For instance, when using sensors with sensitivity curves as shown in Fig. 5, some of the radiation emitted by the NIR1 radiation source may be in the visible wavelength range without substantially disturbing the first image captured by the red, green and blue image sensors.

The second radiation sources are arranged for irradiating infrared radiation. Irradiating from the second side with near infrared radiation is advantageous, since radiation sources and image sensors operating in that wavelength range are widely available. More preferably the radiation irradiated from the second side includes radiation in a wavelength range of 740 - 1000 nm, since such radiation is easily detectable using commercially image sensors and lens systems.

The apparatus according to the present example has a further image sensor 38 in a further camera 39 with a lens 40 for sensing a second radiation pattern from the inspection area 20, the second radiation pattern representing a view from the second side of the package 2 in the inspection area 20. The further image sensor is arranged for capturing a third image (see e.g. Fig. 4) of at least a portion of the second radiation pattern. The data processor 17 is coupled to the further sensor 38 and arranged for identifying data representing dark areas in the third image and recognizing marks in the third image (see e.g. Fig. 3), for instance for determining when a package has reached a position when the first and second images are to be captured and for making available information printed on the package that is to be associated with the result of checking on the basis of the first and second images.

If packages are to be processed of which also the wall on the second side is transparent or of which both walls are equally transparent, it is preferred that no camera is positioned on the second side since such a camera would appear in the images captured by the camera on the first side or the camera on the second side could be positioned outside the field of vision of the camera on the first side, optionally using mirrors and/or image processing to correct for perspective deformation of the third image.

Within the framework of the present invention as set forth in the claims, many other variants and embodiments are conceivable. For instance single first and second light sources can be provided and light from such light sources can be channeled from outside the housing shielding the inspection areas from external light. This is particularly advantageous for the first light source(s) since it allows filtering near infrared radiation out of the radiation emitted by the first light source(s). Furthermore, the housing may be of a different shape than dome shaped and mirrors can be used for directing radiation patterns to an image sensor, allowing to position image sensors on a different side of the transport track than the side from where the radiation pattern is received.

While the apparatus for checking packages according to the example shown is a stand-alone apparatus, it is also possible to provide an apparatus according to the invention in-line with or integrated with a dosage packaging apparatus. This allows early detection of repetitive production errors and accordingly early warning that corrective measures are required to avoid the production of large numbers of faulty packages in the event of repetitive errors.

## Claims

1. A method for inspecting packages (2) containing medication (33-37), comprising:
displacing the packages (2) containing the medication (33-37) along a transport path (4) through an inspection area (20) in an inspection station (3), and, for each package (2) to be inspected:
irradiating the package (2) in the inspection area (20) from a first side of the transport path (4), wherein, on said first side of the medication (33-37), the package (2) is at least partially transparent to said radiation so that the medication (33-37) is irradiated, wherein the irradiation from the first side is at least predominantly with radiation in a first wavelength range;
irradiating the package (2) from a second side of the transport path (4) opposite said first side and towards the first side, wherein, on said second side of the medication, the package (2) is at least partially translucent or transparent to said radiation so that the medication (33-37) is irradiated, and wherein the irradiation from the second side is with radiation in a second wavelength range comprising radiation outside said first wavelength range; and
receiving a radiation pattern from the inspection area on said first side, the received radiation pattern representing a view of the package (2) from said first side;
**characterized by**, while the packages are moving and the irradiation of the package (2) is simultaneous from both the first and the second side;
capturing a first image of a first portion of said received radiation pattern at least predominantly in said first wavelength range; and
capturing a second image of a second portion of said received radiation pattern at least predominantly in said second wavelength range outside said first wavelength range.

2. A method according to claim 1, further comprising:
identifying at least one dark area (33-37) in said second image as a projection of a medicament in the package;
determining at least a color, tint or pattern of a corresponding portion (33-37) of said first image; and
comparing at least the determined color, tint or pattern with a predetermined color, tint or pattern of at least one medicament specified to be present in the package (2).

3. A method according to claim 1 or 2, further comprising:
identifying at least one dark area in said second image as a projection of a medicament (33-37) in the package;
determining at least a size or shape of said at least one dark area; and
comparing the determined size or shape with a predetermined size or shape of at least one medicament specified to be present in the package (2).

4. A method according to any of the preceding claims, wherein the radiation irradiated from said first side is at least predominantly polychromatic light in the visible light wavelength range.

5. A method according to any of the preceding claims, wherein the radiation irradiated from said second side includes radiation outside the visible light wavelength range and wherein said second portion of the received radiation pattern of which said second image is captured is at least predominantly outside the visible light wavelength range.

6. A method according to claim 5, wherein the radiation irradiated from said second side includes near infrared radiation.

7. A method according to any of the preceding claims, wherein the first and second images are captured during at least partially overlapping time intervals.

8. A method according to any of the preceding claims, wherein at least the first or second image is captured while the package (2) is irradiated with both said radiation of the first wavelength range and said radiation of said second wavelength range.

9. An apparatus for inspecting packages (2) containing medication (33-37), comprising:
an inspection station (3); and
a transporter (8-16, 18) for displacing the packages (2) containing the medication (33-37) along a transport path (4) through the inspection station (3);
wherein the inspection station (3) comprises:
a first radiation source (27) for irradiating one of the packages (2) in an inspection area (20) in the inspection station (3) from a first side of the transport path (4);
a second radiation source (28) for irradiating the package (2) in the inspection area (20) from a second side of the transport path (4) opposite said first side, the second radiation source (28) being arranged for directing radiation through the inspection area (20) towards said first side; and
at least one image sensor (29.1, 29.2) for sensing a radiation pattern from the inspection area (20), the received radiation pattern representing a view from said first side of the package (2) in the inspection area (20);
wherein the first radiation source (27) is arranged for irradiating the inspection area (20) at least predominantly with radiation in a first wavelength range and wherein the second radiation source (28) is arranged for irradiating the inspection area (20) with radiation in a second wavelength range including radiation outside said first wavelength range;
**characterized in that** the apparatus is arranged for, while the packages are moving and the irradiation of the package (2) is simultaneous from both the first and the second side, capturing a first image of a first portion of said received radiation pattern at least predominantly in said first wavelength range and capturing a second image of a second portion of said received radiation pattern at least predominantly in said second wavelength range and outside said first wavelength range.

10. An apparatus according to claim 9, further comprising a processor (17) arranged for identifying at least one dark area in said second image as a projection of a medicament (33-37) in the package (2);
determining at least a color, tint or pattern of a corresponding portion (33-37) of said first image; and
comparing at least the determined color, tint or pattern with a predetermined color, tint or, respectively, pattern of at least one medicament specified to be present in the package (2).

11. An apparatus according to claim 9 or 10, further comprising a processor (17) for identifying at least one dark area in said second image as a projection of a medicament (33-37) in the package (2);
determining at least a size or shape of said at least one dark area; and
comparing the determined size or shape with a predetermined size or shape of at least one medicament specified to be present in the package (2).

12. An apparatus according to any of the claims 9-11, wherein the first radiation source (27) is arranged for irradiating at least predominantly polychromatic light in the visible light wavelength range.

13. An apparatus according to any of the claims 9-12, wherein the second radiation source (28) is arranged for irradiating radiation outside the visible light wavelength range.

14. An apparatus according to claim 13, wherein the second radiation source (28) is arranged for irradiating near infrared radiation.

## Patentansprüche

1. Verfahren zur Inspektion von Medikamente (33-37) enthaltenden Paketen (2), umfassend:
Verschieben der Pakete (2), die das Medikament (33-37) enthalten, entlang eines Transportwegs (4) durch einen Inspektionsbereich (20) in einer Inspektionsstation (3), und für jedes zu inspizierende Paket (2):
Bestrahlen des Pakets (2) in dem Inspektionsbereich (20) von einer ersten Seite des Transportwegs (4), wobei auf der ersten Seite des Medikaments (33-37) das Paket (2) wenigstens teilweise transparent auf die Strahlung ist, so dass das Medikament (33-37) bestrahlt wird, wobei die Bestrahlung von der ersten Seite wenigstens überwiegend mit Strahlung in einem ersten Wellenlängenbereich erfolgt;
Bestrahlen des Pakets (2) von einer zweiten Seite des Transportwegs (4) gegenüber der ersten Seite und in Richtung der ersten Seite, wobei auf der zweiten Seite des Medikaments das Paket (2) wenigstens teilweise durchscheinend oder transparent auf die Strahlung ist, so dass das Medikament (33-37) bestrahlt wird, und wobei die Bestrahlung von der zweiten Seite mit Strahlung in einem zweiten Wellenlängenbereich erfolgt, die Strahlung außerhalb des ersten Wellenlängenbereichs umfasst; und
Empfangen eines Strahlungsmusters von dem Inspektionsbereich auf der ersten Seite, wobei das empfangene Strahlungsmuster eine Ansicht des Pakets (2) von der ersten Seite darstellt;
**gekennzeichnet durch**, während sich die Pakete bewegen und die Bestrahlung des Pakets (2) gleichzeitig sowohl von der ersten als auch von der zweiten Seite erfolgt;
Aufnehmen eines ersten Bildes eines ersten Teils des empfangenen Strahlungsmusters wenigstens überwiegend in dem ersten Wellenlängenbereich; und
Aufnehmen eines zweiten Bildes eines zweiten Teils des empfangenen Strahlungsmusters wenigstens überwiegend in dem zweiten Wellenlängenbereich außerhalb des ersten Wellenlängenbereichs.

2. Verfahren nach Anspruch 1, ferner umfassend:
Identifizieren wenigstens eines dunklen Bereichs (33-37) in dem zweiten Bild als eine Projektion eines Medikaments in dem Paket;
Bestimmen wenigstens einer Farbe, eines Farbtons oder eines Musters eines entsprechenden Teils (33-37) des ersten Bildes; und
Vergleichen wenigstens der bestimmten Farbe, des bestimmten Farbtons oder des bestimmten Musters mit einer vorbestimmten Farbe, einem vorbestimmten Farbton oder einem vorbestimmten Muster wenigstens eines Arzneimittels, das in dem Paket (2) vorhanden sein soll.

3. Verfahren nach Anspruch 1 oder 2, ferner umfassend:
Identifizieren wenigstens eines dunklen Bereichs (33-37) in dem zweiten Bild als eine Projektion eines Medikaments (33-37) in dem Paket;
Bestimmen wenigstens einer Größe oder Form des wenigstens einen dunklen Bereichs;
und
Vergleichen der bestimmten Größe oder Form mit einer vorbestimmten Größe oder Form von wenigstens einem Medikament, das in dem Paket (2) vorhanden sein soll.

4. Verfahren nach einem der vorhergehenden Ansprüche, wobei die von der ersten Seite eingestrahlte Strahlung wenigstens überwiegend polychromatisches Licht im sichtbaren Lichtwellenlängenbereich ist.

5. Verfahren nach einem der vorhergehenden Ansprüche, wobei die von der zweiten Seite eingestrahlte Strahlung Strahlung außerhalb des sichtbaren Lichtwellenlängenbereichs einschließt und wobei der zweite Teil des empfangenen Strahlungsmusters, von dem das zweite Bild aufgenommen wird, wenigstens überwiegend außerhalb des sichtbaren Lichtwellenlängenbereichs liegt.

6. Verfahren nach Anspruch 5, wobei die von der zweiten Seite eingestrahlte Strahlung Nahinfrarot-Strahlung einschließt.

7. Verfahren nach einem der vorhergehenden Ansprüche, wobei das erste und das zweite Bild während wenigstens teilweise überlappender Zeitintervalle aufgenommen werden.

8. Verfahren nach einem der vorhergehenden Ansprüche, wobei wenigstens das erste oder zweite Bild aufgenommen wird, während das Paket (2) sowohl mit der Strahlung des ersten Wellenlängenbereichs als auch mit der Strahlung des zweiten Wellenlängenbereichs bestrahlt wird.

9. Vorrichtung zur Inspektion von Medikamente (33-37) enthaltenden Paketen (2), umfassend:
eine Inspektionsstation (3); und
einen Transporter (8-16, 18) zum Verschieben der Pakete (2), die das Medikament (33-37) enthalten, entlang eines Transportwegs (4) durch die Inspektionsstation (3);
wobei die Inspektionsstation (3) Folgendes umfasst:
eine erste Strahlungsquelle (27) zum Bestrahlen eines der Pakete (2) in einem Inspektionsbereich (20) in der Inspektionsstation (3) von einer ersten Seite des Transportwegs (4);
eine zweite Strahlungsquelle (28) zum Bestrahlen des Pakets (2) im Inspektionsbereich (20) von einer der ersten Seite gegenüberliegenden zweiten Seite des Transportwegs (4), wobei die zweite Strahlungsquelle (28) zum Durchleiten von Strahlung durch den Inspektionsbereich (20) in Richtung der ersten Seite eingerichtet ist; und
wenigstens einen Bildsensor (29.1, 29.2) zum Erfassen eines Strahlungsmusters aus dem Inspektionsbereich (20), wobei das empfangene Strahlungsmuster eine Ansicht von der ersten Seite des Pakets (2) in den Inspektionsbereich (20) darstellt;
wobei die erste Strahlungsquelle (27) dazu eingerichtet ist, den Inspektionsbereich (20) wenigstens überwiegend mit Strahlung in einem ersten Wellenlängenbereich zu bestrahlen und wobei die zweite Strahlungsquelle (28) dazu eingerichtet ist, den Inspektionsbereich (20) mit Strahlung in einem zweiten Wellenlängenbereich zu bestrahlen, einschließlich der Strahlung außerhalb des ersten Wellenlängenbereichs;
**dadurch gekennzeichnet, dass** die Vorrichtung dafür eingerichtet ist, während sich die Pakete bewegen und die Bestrahlung des Pakets (2) gleichzeitig sowohl von der ersten als auch von der zweiten Seite erfolgt, ein erstes Bild eines ersten Teils des empfangenen Strahlungsmusters wenigstens überwiegend aufzunehmen in dem ersten Wellenlängenbereich und ein zweites Bild eines zweiten Teils des empfangenen Strahlungsmusters wenigstens überwiegend in dem zweiten Wellenlängenbereich und außerhalb des ersten Wellenlängenbereichs aufzunehmen.

10. Vorrichtung nach Anspruch 9, ferner mit einem Prozessor (17) zum Identifizieren wenigstens eines dunklen Bereichs in dem zweiten Bild als eine Projektion eines Medikaments (33-37) in dem Paket (2);
Bestimmen wenigstens einer Farbe, eines Farbtons oder eines Musters eines entsprechenden Teils (33-37) des ersten Bildes; und
Vergleichen jeweils wenigstens der bestimmten Farbe, des bestimmten Farbtons oder des bestimmten Musters mit einer vorbestimmten Farbe, einem vorbestimmten Farbton oder einem vorbestimmten Muster wenigstens eines Arzneimittels, das in dem Paket (2) vorhanden sein soll.

11. Vorrichtung nach Anspruch 9 oder 10, ferner mit einem Prozessor (17) zum Identifizieren wenigstens eines dunklen Bereichs in dem zweiten Bild als eine Projektion eines Medikaments (33-37) in dem Paket (2);
Bestimmen wenigstens einer Größe oder Form des wenigstens einen dunklen Bereichs;
und
Vergleichen der bestimmten Größe oder Form mit einer vorbestimmten Größe oder Form von wenigstens einem Medikament, das in dem Paket (2) vorhanden sein soll.

12. Vorrichtung nach einem der Ansprüche 9 bis 11, wobei die erste Strahlungsquelle (27) dazu eingerichtet ist, wenigstens überwiegend polychromatisches Licht im sichtbaren Lichtwellenlängenbereich einzustrahlen.

13. Vorrichtung nach einem der Ansprüche 9 bis 12, wobei die zweite Strahlungsquelle (28) dazu eingerichtet ist, Strahlung außerhalb des sichtbaren Lichtwellenlängenbereichs einzustrahlen.

14. Vorrichtung nach Anspruch 13, wobei die zweite Strahlungsquelle (28) dazu eingerichtet ist, Nahinfrarot-Strahlung einzustrahlen.

## Revendications

1. Procédé pour inspecter des emballages (2) contenant un ou des médicaments (33-37), comprenant :
le déplacement des emballages (2) contenant le ou les médicaments (33-37) le long d'un passage de transport (4) à travers une zone d'inspection (20) dans une station d'inspection (3), et, pour chaque emballage (2) destiné à être inspecté :
l'irradiation de l'emballage (2) dans la zone d'inspection (20) depuis un premier côté du passage de transport (4), où, sur ledit premier côté du ou des médicaments (33-37), l'emballage (2) est au moins en partie transparent audit rayonnement de sorte que le ou les médicaments (33-37) est ou sont irradiés, où l'irradiation depuis le premier côté est au moins de manière prédominante avec un rayonnement dans une première gamme de longueurs d'onde ;
l'irradiation de l'emballage (2) depuis un second côté du passage de transport (4) opposé audit premier côté et en direction du premier côté, où, sur ledit second côté du ou des médicaments, l'emballage (2) est au moins en partie translucide ou transparent audit rayonnement de sorte que le ou les médicaments (33-37) est ou sont irradiés, et où l'irradiation depuis le second côté est avec un rayonnement dans une seconde gamme de longueurs d'onde comprenant un rayonnement à l'extérieur de ladite première gamme de longueurs d'onde ; et
la réception d'un motif de rayonnement depuis la zone d'inspection sur ledit premier côté, le motif de rayonnement reçu représentant une vue de l'emballage (2) depuis ledit premier côté ;
**caractérisé par**, tandis que les emballages sont en mouvement et que l'irradiation de l'emballage (2) est simultanée depuis le premier et le second côté ;
la capture d'une première image d'une première partie dudit motif de rayonnement reçu au moins de manière prédominante dans ladite première gamme de longueurs d'onde ; et
la capture d'une seconde image d'une seconde partie dudit motif de rayonnement reçu au moins de manière prédominante dans ladite seconde gamme de longueurs d'onde à l'extérieur de ladite première gamme de longueurs d'onde.

2. Procédé selon la revendication 1, comprenant en outre :
l'identification d'au moins une zone sombre (33-37) dans ladite seconde image sous forme d'une projection d'un médicament dans l'emballage ;
la détermination d'au moins une couleur, teinte ou motif d'une partie correspondante (33-37) de ladite première image ; et
la comparaison d'au moins la couleur, teinte ou motif déterminé(e) avec une couleur, teinte ou motif prédéterminé(e) d'au moins un médicament spécifié comme étant présent dans l'emballage (2).

3. Procédé selon la revendication 1 ou 2, comprenant en outre :
l'identification d'au moins une zone sombre dans ladite seconde image sous forme d'une projection d'un médicament (33-37) dans l'emballage ;
la détermination d'au moins une dimension ou forme de ladite au moins une zone sombre ;
et
la comparaison de la dimension ou forme déterminée avec une dimension ou forme prédéterminée d'au moins un médicament spécifié comme étant présent dans l'emballage (2).

4. Procédé selon l'une quelconque des revendications précédentes, où le rayonnement irradié depuis ledit premier côté est au moins de manière prédominante de la lumière polychromatique dans la gamme de longueurs d'onde de la lumière visible.

5. Procédé selon l'une quelconque des revendications précédentes, où le rayonnement irradié depuis ledit second côté inclut un rayonnement à l'extérieur de la gamme de longueurs d'onde de la lumière visible et où ladite seconde partie du motif de rayonnement reçu dont ladite seconde image est capturée est au moins de manière prédominante à l'extérieur de la gamme de longueurs d'onde de la lumière visible.

6. Procédé selon la revendication 5, où le rayonnement irradié depuis ledit second côté inclut un rayonnement infrarouge proche.

7. Procédé selon l'une quelconque des revendications précédentes, où les première et seconde images sont capturées pendant des intervalles de temps se chevauchant au moins en partie.

8. Procédé selon l'une quelconque des revendications précédentes, où au moins la première ou seconde image est capturée tandis que l'emballage (2) est irradié avec ledit rayonnement de la première gamme de longueurs d'onde et ledit rayonnement de ladite seconde gamme de longueurs d'onde.

9. Appareil pour inspecter des emballages (2) contenant un ou des médicaments (33-37), comprenant :
une station d'inspection (3) ; et
un transporteur (8-16, 18) pour déplacer les emballages (2) contenant le ou les médicaments (33-37) le long d'un passage de transport (4) à travers la station d'inspection (3) ;
où la station d'inspection (3) comprend :
une première source de rayonnement (27) pour irradier l'un des emballages (2) dans une zone d'inspection (20) dans la station d'inspection (3) depuis un premier côté du passage de transport (4) ;
une seconde source de rayonnement (28) pour irradier l'emballage (2) dans la zone d'inspection (20) depuis un second côté du passage de transport (4) opposé audit premier côté, la seconde source de rayonnement (28) étant agencée pour diriger un rayonnement à travers la zone d'inspection (20) en direction dudit premier côté ; et
au moins un capteur d'image (29.1, 29.2) pour capter un motif de rayonnement depuis la zone d'inspection (20), le motif de rayonnement reçu représentant une vue depuis ledit premier côté de l'emballage (2) dans la zone d'inspection (20) ;
où la première source de rayonnement (27) est agencée pour irradier la zone d'inspection (20) au moins de manière prédominante avec un rayonnement dans une première gamme de longueurs d'onde et où la seconde source de rayonnement (28) est agencée pour irradier la zone d'inspection (20) avec un rayonnement dans une seconde gamme de longueurs d'onde incluant un rayonnement à l'extérieur de ladite première gamme de longueurs d'onde ;
**caractérisé en ce que** l'appareil est agencé pour, tandis que les emballages sont en mouvement et que l'irradiation de l'emballage (2) est simultanée depuis le premier et le second côté, capturer une première image d'une première partie dudit motif de rayonnement reçu au moins de manière prédominante dans ladite première gamme de longueurs d'onde et capturer une seconde image d'une seconde partie dudit motif de rayonnement reçu au moins de manière prédominante dans ladite seconde gamme de longueurs d'onde et à l'extérieur de ladite première gamme de longueurs d'onde.

10. Appareil selon la revendication 9, comprenant en outre un processeur (17) agencé pour identifier au moins une zone sombre dans ladite seconde image sous forme d'une projection d'un médicament (33-37) dans l'emballage (2) ;
déterminer au moins une couleur, teinte ou motif d'une partie correspondante (33-37) de ladite première image ; et
comparer au moins la couleur, teinte ou motif déterminé(e) avec une couleur, teinte ou, respectivement, motif prédéterminé(e) d'au moins un médicament spécifié comme étant présent dans l'emballage (2).

11. Appareil selon la revendication 9 ou 10, comprenant en outre un processeur (17) pour identifier au moins une zone sombre dans ladite seconde image sous forme d'une projection d'un médicament (33-37) dans l'emballage (2) ;
déterminer au moins une dimension ou forme de ladite au moins une zone sombre ;
et
comparer la dimension ou forme déterminée avec une dimension ou forme prédéterminée d'au moins un médicament spécifié comme étant présent dans l'emballage (2).

12. Appareil selon l'une quelconque des revendications 9-11, où la première source de rayonnement (27) est agencée pour irradier au moins de manière prédominante de la lumière polychromatique dans la gamme de longueurs d'onde de la lumière visible.

13. Appareil selon l'une quelconque des revendications 9-12, où la seconde source de rayonnement (28) est agencée pour irradier un rayonnement à l'extérieur de la gamme de longueurs d'onde de la lumière visible.

14. Appareil selon la revendication 13, où la seconde source de rayonnement (28) est agencée pour irradier un rayonnement infrarouge proche.
